# EUROPÄISCHE PATENTSCHRIFT

(11) **EP 2 818 785 B1**
(45) Veröffentlichungstag und Bekanntmachung des Hinweises auf die Patenterteilung: **16.08.2023**
(21) Anmeldenummer: 14169805.0
(22) Anmeldetag: 26.05.2014
(51) Int. Cl.: F16N 39/06, F01M 1/10, F01M 1/02, F16N 13/20

(54) **Schmiermittelfiltereinheit und Schmiersystem mit der Schmiermittelfiltereinheit**
Lubricant filter unit and lubrication system with the lubricant filter unit
Unité de filtre de lubrifiant et système de lubrification doté de l'unité de filtre de lubrifiant

(30) Priorität: 24.06.2013 DE 102013211903
(43) Veröffentlichungstag der Anmeldung: 31.12.2014
(73) Patentinhaber: SKF Lubrication Systems Germany AG, 12277 Berlin (DE)
(72) Erfinder: Kreutzkämper, Jürgen, 74915 Waibstadt-Daisbach (DE); Schmidt, Holger, 14532 Klein-Manchow (DE); Schönherr, Dieter, 14979 Kleinbeeren (DE)
(74) Vertreter: Kuhstrebe, Jochen

(56) Entgegenhaltungen:
- DE-A1- 2 930 994
- DE-C- 613 429
- DE-C- 616 397
- DE-C- 721 097
- FR-A- 609 753
- JP-A- S5 882 011

## Beschreibung

Ausführungsbeispiele beziehen sich auf eine Schmiermittelfiltereinheit mit einem Schmiermittelfilter zum Filtern eines Schmiermittels nach dem Anspruch 1.

Zum Fördern eines Mediums, beispielsweise eines Schmiermediums oder eines Schmiermittels, wie Öl oder Fließfett, beispielsweise in Zentralschmieranlagen, werden Pumpen aller Art eingesetzt. Als Pumpe kann beispielsweise eine Zahnradpumpe mit rotierenden Komponenten eingesetzt werden. Aus unterschiedlichen Gründen kann das Schmiermedium oder -mittel Verunreinigungen aufweisen, also beispielsweise mit Partikeln, Schmutz, Abrieb oder dgl. verunreinigt sein. Um diese Verunreinigungen nicht in das Zentralschmiersystem gelangen zu lassen, werden oft Filter oder Siebe eingesetzt. Diese sollen die Verunreinigungen aus dem Schmiermittel filtern. Der Filter oder das Sieb können von einer Förderrichtung der Pumpe aus betrachtet, vor oder nach der Pumpe eingesetzt werden. Wenn der Filter oder das Sieb nach der Pumpe, also auf der Druckseite der Pumpe, eingesetzt wird, können die Verunreinigungen, Partikel oder der Schmutz die Pumpe passieren. Dies kann ggf. zu einer Beschädigung oder einer Verstopfung der Pumpe führen.

Wenn ein Filter oder das Sieb vor der Pumpe, also in einem Saugbereich der Pumpe, eingesetzt wird, muss bei der Dimensionierung des Filters oder des Siebs stets ein Kompromiss eingegangen werden. Dieser Kompromiss besteht meist zwischen einer kleinstmöglichen Maschenweite, um selbst kleinste Verunreinigungen oder Partikel herauszufiltern und einem größtmöglichen zu erreichenden Durchsatz (Volumenstrom), der den Filter passieren kann, um eine Verlustleistung der Pumpe klein zu halten. Bedingt durch dieses Prinzip reduziert sich mit fortschreitender Verschmutzung des Filters ein Volumenstrom, der den Filter passieren kann. Ferner kann es passieren, dass bei sehr kleiner Maschenweite des Siebs oder kleiner Porengröße des Filters Bestandteile des Schmiermediums wie z.B. eingebrachte Feststoffanteile oder Additive unerwünschter Weise bzw. ungewollt aus dem Schmiermedium herausgefiltert werden können.

Bei konventionellen Lösungen wird meist versucht, den Filter für das spezifische eingesetzte Schmiermedium so zu dimensionieren, dass bei einer ausreichenden Filterwirkung ein größtmöglicher Durchsatz bzw. bei einem größtmöglichen Durchsatz eine ausreichende Filterwirkung erzielt wird. Mit dem Filter soll, beispielsweise in Kombination mit einer bestimmten Pumpe und einem bestimmten Schmiermittel, die größtmögliche Wirkung erzielt werden. Dadurch kann bei konventionellen Lösungen die Flexibilität des Nutzers hinsichtlich des Einsatzes und der Auswahl des Schmiermediums reduziert sein. Ferner kann dies dazu führen, dass je nach verwendetem Schmiermedium eine unterschiedliche Variante eines Pumpenaggregats oder einer Pumpe verwendet und/oder eingesetzt wird, bedingt durch unterschiedliche Filterauslegungen. Alle genannten Effekte sind unerwünscht und führen in der Praxis zu mehr oder weniger guten Kompromisslösungen.

Die Druckschrift DE 616 397 C lehrt eine Zahnradpumpe mit Schleuderreiniger, der unmittelbar vor der Zahnradpumpe in den Ölweg eingeschaltet ist und mit dieser angetrieben wird.

Die Druckschrift DE 29 30 994 A1 lehrt ein Verfahren zum Reinigen von Schmieroder/und Treibstoffen in Fahrzeugen, insbesondere Kraftfahrzeugen.

Die Druckschrift JP S58 82011 A lehrt ein kompaktes Hochleistungs-Motorölfiltersystem zur Verwendung in Viertaktmotoren und dergleichen.

Die Druckschrift FR 609 753 A lehrt eine Ölreinigungsvorrichtung durch Zentrifugalkraft für Verbrennungsmotoren.

Die Patentschrift DE 721 097 C lehrt eine unmittelbar im Schmiermittel der Ölwanne umlaufende Schleudertrommel, die in oder hinter ihrer Einströmöffnung ein zusätzliches Schaufelrad aufweist, das das von der Ölpumpe angesaugte ungereinigte Öl in die Schleudertrommel ablenkt; bei Verstopfen derselben aber einen unmittelbaren Schmiermittel-Durchfluss zur Pumpe zulässt.

Es besteht daher ein Bedarf daran, einen Kompromiss zwischen einer Verbesserung der Filterwirkung und einer Verbesserung der Pumpenleistung zu verbessern. Diesem Bedarf trägt eine Schmiermittelfiltereinheit nach dem Anspruch 1 Rechnung.

Ausführungsbeispiele betreffen eine Schmiermittelfiltereinheit mit einem Schmiermittelfilter zum Filtern eines Schmiermittels. Die Schmiermittelfiltereinheit umfasst wenigstens eine Eingangsöffnung. Diese ist ausgebildet, um das Schmiermittel in einen Innenraum des Schmiermittelfilters eintreten zu lassen. Ferner weist die Schmiermittelfiltereinheit wenigstens eine Ausgangsöffnung auf. Die wenigstens eine Ausgangsöffnung ist ausgebildet, um das Schmiermittel wieder aus dem Innenraum des Schmiermittelfilters austreten zu lassen. Ferner ist der Schmiermittelfilter oder Filter ausgebildet, um um eine Achse gedreht zu werden, sodass Partikel, die sich in dem Schmiermittel befinden, radial nach außen beschleunigt werden.

Dadurch, dass der Schmiermittelfilter ausgebildet ist, um um eine Achse gedreht zu werden, kann der Schmiermittelfilter beispielsweise nach dem Prinzip einer Zentrifuge wirken bzw. eine Zentrifuge oder ein Zentrifugalfilter sein. Mit anderen Worten ausgedrückt, wird die Massenträgheit in dem Innenraum bzw. Zentrifugiergutraum zur Stofftrennung nutzt. Die Partikel bzw. der Schmutz, beispielsweise mit einer höhereren Dichte als das Schmiermittel, wandern aufgrund der höheren Trägheit nach außen. Dabei verdrängen sie Bestandteile mit niedrigerer Dichte, beispielsweise das Schmiermittel, die hierdurch beispielsweise in einen mittleren Bereich des Innenraums gelangen können und ggf. den Schmiermittelfilter wieder verlassen.

Bei einem Betrieb, also einer Drehung des Schmiermittelfilters bzw. wenn dieser um eine Achse gedreht wird, kann eine Zentrifugalkraft aufgebaut werden, die ausreichend groß ist, um das Schmiermittel und auch die Partikel nach radial außen, also in eine andere Richtung als in die Förderrichtung, zu beschleunigen. Mit anderen Worten ausgedrückt, können die Partikel beispielsweise in eine Richtung eines Radius einer Drehbewegung, die der Schmiermittelfilter ausführt, beschleunigt werden. Dadurch kann beispielsweise erreicht werden, dass die Partikel den Innenraum des Schmiermittelfilters nicht verlassen bzw. von ihrer eigentlichen Bahn in Förderrichtung abgelenkt werden und beispielsweise in dem Innenraum des Schmiermittelfilters verbleiben.

Partikel können dabei jedwede Art von Partikel oder Teilchen sein, die sich ggf. unbeabsichtigter Weise in dem Schmiermittel befindet und die Schmierfähigkeit des Schmiermittels oder ggf. die Funktion eines Schmiermittelverbrauchers beeinträchtigen können. Ein Partikel kann beispielsweise Schmutz, Abrieb, Späne, Fasern, etc. sein. Eine Förderrichtung des Schmiermittels kann ggf. von einer Eingangsöffnung des Schmiermittelfilters zu einer Ausgangsöffnung des Schmiermittelfilters gerichtet sein. Beispielsweise der Schmiermittelfilter oder ein anderes Bauteil, das ausgebildet ist, um um eine Achse gedreht zu werden, kann sich beispielsweise während eines Betriebs drehen, bzw. kann drehbar gelagert sein. Eine Geschwindigkeit oder eine Drehzahl mit der der Schmiermittelfilter während seines Betriebs gedreht wird, kann ggf. beliebig, beispielsweise in Abhängigkeit einer Viskosität des Schmiermittels gewählt werden. Ein Schmiermittel oder -medium kann dabei jedwedes Mittel oder Medium sein, das geeignet ist, eine gewünschte Schmierwirkung zu bewirken, beispielsweise ein Öl oder ein Fließfett. Das Schmiermedium kann beispielsweise eine Viskosität aufweisen, die ermöglichen kann, dass sich bei einer Drehung (Rotation) des Schmiermittelfilters eine ausreichende Zentrifugalkraft auf baut. Ein Innenraum des Schmiermittelfilters kann dabei ein Bereich des Schmiermittelfilters sein, der geeignet ist das Schmiermittel in Rotation zu versetzen, wenn der Schmiermittelfilter um eine Achse gedreht wird.

Bei einigen weiteren Ausführungsbeispielen ist die wenigstens eine Ausgangsöffnung in einem radial innen liegenden Bereich angeordnet. Dadurch kann ggf. ermöglicht werden, dass die Partikel, die nach radial außen beschleunigt werden, nicht aus dem Innenraum des Schmiermittelfilters austreten können. Die Ausgangsöffnung kann jedwede Form, die geeignet ist das Schmiermittel aus dem Innenraum des Schmiermittelfilters austreten zu lassen, aufweisen. Beispielsweise kann die Ausgangsöffnung als Kreisscheibe oder als Kreisring, Teilkreis, rund, oval, rechteckig, etc. ausgebildet sein. Die Ausgangsöffnung des Schmiermittelfilters kann beispielsweise im Wesentlichen konzentrisch zu einer Drehachse des Schmiermittelfilters angeordnet. Beispielsweise kann eine lichte Weite der Ausgangsöffnung geringer sein, als eine lichte Weite des Innenraums des Schmiermittelfilters. Dadurch kann ggf. ermöglicht werden, dass sich die Partikel, wenn sich der Schmiermittelfilter dreht, in einen Bereich nach radial außen beschleunigt werden können. Der Bereich kann beispielsweise zwischen der Ausgangsöffnung und einer äußeren Begrenzung des Schmiermittelfilters, die ggf. im Wesentlichen parallel zu einer Förderrichtung des Schmiermittels und/oder einer Drehachse des Schmierfilters angeordnet ist, liegen. Die Ausgangsöffnung kann ggf. in eine Wand des Schmiermittelfilters eingebracht sein, die beispielsweise im Wesentlichen senkrecht zu einer Drehachse des Schmiermittelfilters angeordnet ist. Des Weiteren kann der Schmiermittelfilter auch eine Mehrzahl von Ausgangsöffnungen aufweisen. Beispielsweise können diese in einem im Wesentlichen konzentrischen Muster zu der Drehachse angeordnet sein.

Analog kann die Eingangsöffnung im Wesentlichen in eine Seite und/oder eine Wand des Schmiermittelfilters eingebracht sein, die im Wesentlichen senkrecht zu einer Drehachse und/oder Förderrichtung des Schmiermittelfilters angeordnet ist. Die Eingangsöffnung und die Ausgangsöffnung des Schmiermittelfilters können einen ähnlichem Form und/oder ein ähnlicher Durchmesser aufweisen. Alternativ kann die Eingangsöffnung eine Form aufweisen, die nicht zu einer Form der Ausgangsöffnung korrespondiert.

Bei einigen weiteren Ausführungsbeispielen ist der Schmiermittelfilter ausgebildet, sodass sich die Partikel in einem radial außen liegenden Bereich des Innenraums des Schmiermittelfilters sammeln können. Dadurch kann ggf. erreicht werden, dass die Partikel, beispielsweise bei einem Betrieb des Schmiermittelfilters, nicht aus dem Innenraum des Schmiermittelfilters austreten können. Dadurch kann ggf. die Filterwirkung des Schmiermittelfilters, verbessert und/oder erhöht werden. Beispielsweise kann der Schmiermittelfilter dazu eine Begrenzungswand aufweisen, die im Wesentlichen quer zu einer Richtung angeordnet ist, in die die Partikel nach radial außen beschleunigt werden. So kann ggf. ermöglicht werden, dass eine Bewegung der Partikel nach radial außen durch die Umfangswand begrenzt wird. Beispielsweise kann die Umfangswand im Wesentlichen parallel zu einer Drehachse und/oder einer Förderrichtung des Schmiermittels angeordnet sein.

Bei einigen weiteren Ausführungsbeispielen weist der Schmiermittelfilter zumindest einen zylinderförmigen Abschnitt auf. Der zylinderförmige Abschnitt ist im Wesentlichen parallel zu einer Förderrichtung und/oder einer Drehachse des Schmiermittelfilters angeordnet. Beispielsweise kann sich der Winkel in einem Bereich zwischen 0° bis 2°, 2° bis 5°, 5° bis 10°, 10° bis 20°, 20° bis 30°, etc. zu seiner Rotations- oder Symmetrieachse erstrecken. Dadurch kann ggf. eine einfache Bauform des Schmiermittelfilters, die sich ggf. auf einfache Art und Weise mit einer Pumpe kombinieren lässt, verwirklicht werden. Der zylinderförmige Abschnitt kann jedwede Form einer Grundfläche aufweisen. Beispielsweise kann ein Vieleck, Viereck, Dreieck, Rechteck, Quadrat, Kreis, Oval oder eine andere Form die Grundfläche des zylinderförmigen Abschnitts dar. Der zylinderförmige Abschnitt bzw. eine Umfangswand kann ggf. eine geschlossene Fläche sein.

Bei einigen weiteren Ausführungsbeispielen weist der Schmiermittelfilter eine im Wesentlichen glatte Innenstruktur auf. Dazu kann eine Umfangswand beispielsweise porös als Gitter oder Lochstruktur ausgebildet sein. Ferner kann die Umfangswand des Schmiermittelfilters strukturfrei, rippenfrei bzw. innen und/oder außen ohne eine Rippenstruktur ausgebildet sein. Dadurch kann ggf. reduziert werden, dass das Schmiermittel und/oder - medium verwirbelt bzw. gequirlt wird. Dadurch kann ggf. eine Erhöhung des Energieverbrauchs durch ein zu starkes Verwirbeln und oder Verquirlen des Schmiermediums reduziert oder vermieden werden. Ferner kann so ggf. das Auftreten von Kavitation oder dadurch verursachter Kavitationseffekten an Bauteilen des Schmiermittelfilters oder anderen Komponenten des Schmiersystems reduziert oder vermieden werden.

Bei einigen weiteren Ausführungsbeispielen weist der Schmiermittelfilter einen Speicherraum für Schmutz auf. Beispielsweise können sich die Partikel, wenn sich der Schmiermittelfilter im Betrieb befindet, also gedreht wird, in dem Speicherraum sammeln oder an dessen Flächen anlegen. Dabei kann der Speicherraum für Schmutz ggf. eine Innenfläche, bzw. im Wesentlichen glatte Innenfläche einer Umfangswandung bzw. des zylinderförmigen Abschnitts sein. Wird der Schmiermittelfilter gestoppt bzw. nicht mehr gedreht, baut sich die Zentrifugalkraft ab, die auf die Partikel wirkt und diese nach radial außen beschleunigt. Dies kann ggf. dazu führen, dass sich die Partikel von der Innenwand bzw. aus dem Speicherraum für Schmutz lösen und in Richtung einer Gewichtskraft nach unten fallen bzw. treiben oder sich wieder in dem Schmiermittel verteilen. Sobald der Schmiermittelfilter wieder in Betrieb genommen wird (gedreht wird), können die Partikel wieder nach radial außen beschleunigt werden. Ferner kann ggf. der Schmiermittelfilter in radialer Richtung eine Nut aufweisen, die in den Schmiermittelfilter eingebracht sein kann und die den durch die Zentrifugalkraft gesammelten Schmutz aufnimmt. Diese Nut kann ggf. bewirken, dass Partikel oder Schmutz zumindest teilweise, auch wenn sich der Schmiermittelfilter nicht dreht, in der Nut gehalten werden kann und nicht wieder in das Schmiermittelreservoir zurückfallen kann.

Die Nut kann so beispielsweise in einem Innenraum des Schmiermittelfilters angeordnet sein. Die Nut kann beispielsweise im Wesentlichen parallel zu der Achse und/oder im Wesentlichen senkrecht zu einer Achse angeordnet sein. Eine Größe der Nut kann ggf. so bemessen sein, dass diese das zu erwartende Volumen an Partikeln und/oder Schmutzpartikeln über die gesamte Laufzeit des Filters aufnehmen kann. In anderen Ausführungsbeispielen kann die Nut so ausgebildet sein, dass sie im Rahmen einer Wartung entleert werden kann. Alternativ kann ggf. eine ausreichende Filterwirkung des Schmiermittelfilters auch ohne einen speziellen Speicherraum oder eine Nut für Schmutz erreicht werden. Aufgrund der Viskosität des Schmiermittels kann ggf. eine ausreichend große Zentrifugalkraft auf die Partikel aufgebaut werden, sodass sich diese an einer im Wesentlichen glatten Innenstruktur des Innenraums des Schmierfilters anlegen können, bzw. in eine andere Richtung als die Förderrichtung des Schmiermittels beschleunigt werden können.

Bei einigen weiteren Ausführungsbeispielen ist der Schmiermittelfilter ausgebildet, sodass das Schmiermittel den Schmiermittelfilter parallel zu der Achse und/oder in einem Bereich, der sich von der Eingangsöffnung aus jeweils um bis zu 45°auf einer der Achse abgewandte Seite erstreckt, durchströmen kann. Dadurch, dass in dem Schmiermittelfilter keine Elemente vorhanden sind, an denen das Schmiermedium umgeleitet wird, kann bei manchen Ausführungsbeispielen ein Strömungswiderstand reduziert sein. Auch wenn der Schmiermittelfilter so ausgebildet ist, dass das Schmiermittel ihn wie beschrieben durchströmen kann, kann das Schmiermittel bei manchen Ausführungsbeispielen, beispielsweise in Abhängigkeit von einem Betriebszustand, einen anderen Weg nehmen und bei einer Drehung des Schmiermittelfilters in einen Randbereich des Schmiermittelfilters umgelenkt werden. Beispielsweise kann die Filterwirkung ausschließlich durch eine Drehung des Schmiermittelfilters bewirkt werden. Bei manchen Ausführungsbeispielen kann so eine zu bewegende Masse des Schmiermittelfilters reduziert sein. um die Filterwirkung ausschließlich durch eine Drehung des Schmiermittelfilters zu bewirken.

Bei einigen weiteren Ausführungsbeispielen umfasst die Schmiermittelfiltereinheit eine Schmiermittelpumpe. Die Schmiermittelpumpe ist ausgebildet, ein Schmiermittel aus einem Schmiermittelreservoir über wenigstens eine Ansaugöffnung der Schmiermittelpumpe zu einer Druckseite der Schmiermittelpumpe zu fördern. Die wenigstens eine Ausgangsöffnung des Schmiermittelfilters ist mit der wenigstens einen Ansaugöffnung der Schmiermittelpumpe gekoppelt. Mit anderen Worten ausgedrückt, kann der Schmiermittelfilter, entlang einer Förderrichtung, vor der Schmiermittelpumpe angeordnet sein. Dadurch kann beispielsweise ermöglicht werden, dass das Schmiermittel gefiltert wird, bevor das Schmiermittel in die Schmiermittelpumpe eintritt. Dadurch kann ggf. erreicht werden, dass der Schmutz die Schmiermittelpumpe oder Pumpe nicht passiert. Dadurch kann ggf. verhindert werden, dass die Schmiermittelpumpe und/oder Ventile die nach dem Schmiermittelfilter in der Schmiermittelpumpe angeordnet sind in ihrer Funktion nicht beeinflusst werden. Dadurch kann ggf. vermieden werden oder zumindest die Gefahr reduziert werden, eine Funktion (Arbeitsweise) der Pumpe und/oder des Systems in dem die Pumpe angeordnet ist (Druckaufbau und Entlastung), zu beeinflussen. Dadurch, dass der Schmiermittelfilter nach dem Ausführungsbeispiel in Kombination mit einer Schmiermittelpumpe eingesetzt wird, kann ggf. erreicht werden, dass eine Pumpleistung der Schmiermittelpumpe nicht beeinträchtigt wird. Mit anderen Worten ausgedrückt, kann durch die Kombination der Schmiermittelpumpe mit einem Schmiermittelfilter nach dem Ausführungsbeispiel bzw. dem Zentrifugalfilter erreicht werden, dass der Schmiermittelfilter gemäß dem Ausführungsbeispiel bzw. der Filtertyp keine Auswirkung auf das Ansaugverhalten der Pumpe hat. Dadurch kann ggf. entfallen, dass der Filter- oder Pumpentyp an das Schmiermittel angepasst oder abgestimmt werden muss. Der Schmiermittelfilter kann beispielsweise mit der Schmiermittelpumpe kombiniert werden, unabhängig davon welches Schmiermittel, welcher Viskosität, mit welchem Verschmutzungsgrad und mit welcher zu erwartenden Größe der Verschmutzungspartikel gepumpt und/oder gefiltert werden soll. Dadurch kann ggf. eine Schmiermittelfilterpumpeinheit, die einen Schmiermittelfilter gemäß einem der vorhergehenden Ausführungsbeispiele und eine Schmiermittelpumpe umfasst, bereit gestellt werden. Als Schmiermittelpumpe kann dabei jedwede Art von Pumpe, die ausgebildet ist, das Schmiermittel zu fördern, eingesetzt werden. Beispiele für solche Pumpen sind Rotationskolbenpumpe, Drehkolbenpumpe, Drehschieberpumpen, Kreiskolbenpumpe, Zahnradpumpen, Exzenterschneckenpumpen, Förderschnecken, Kettenpumpe, Kolbenpumpe, Axialkolbenpumpe, Hubkolbenpumpe, Radialkolbenpumpe, Ringkolbenpumpe, Schlauchpumpe, Schraubenspindelpumpe, Sinuspumpe oder Zahnriemenpumpen.

Bei einigen weiteren Ausführungsbeispielen weist die Schmiermittelpumpe eine drehende Antriebswelle auf. Beispielsweise kann die Antriebswelle dazu ausgebildet sein, den Schmiermittelfilter zu drehen bzw. anzutreiben. Dadurch kann ggf. eine kompakte Bauweise der Schmiermittelfiltereinheit erreicht werden. Das kann ggf. ermöglicht werden, weil für den Schmiermittelfilter kein eigener Antrieb vorgesehen werden muss. Ergänzend oder alternativ kann der Schmiermittelfilter einen eigenen Antrieb aufweisen. So kann ggf. eine Erhöhung der Filterwirkung unabhängig von der Pumpwirkung ermöglicht werden. Die Antriebswelle kann beispielsweise fluchtend zu einer Achse oder Drehachse, um die der Schmiermittelfilter gedreht wird, angeordnet sein. Beispielsweise kann es sich bei dem Bauteil, das den Schmiermittelfilter antreibt oder dreht und die Schmiermittelpumpe antreibt, um dasselbe Bauteil handeln.

Bei einigen weiteren Ausführungsbeispielen ist der Schmiermittelfilter über ein Getriebe mit der Antriebswelle verbunden. Es kann ggf. ermöglicht werden, dass der Schmiermittelfilter mit einer anderen Drehzahl als die Pumpe gedreht werden kann. Dadurch kann ggf. ermöglicht werden, dass eine Filterleistung des Schmiermittelfilters angepasst werden kann, ohne eine Pumpleistung der Schmiermittelpumpe zu verändern.

Bei einigen weiteren Ausführungsbeispielen sind der Schmiermittelfilter und die Schmiermittelpumpe in einem gemeinsamen Gehäuse angeordnet. So kann ggf. erreicht werden, dass die Schmiermittelfiltereinheit bzw. die Schmiermittelpumpe und der Schmiermittelfilter eine kompakte Einheit bilden. Beispielsweise kann dadurch eine Montage der Schmiermittelfiltereinheit vereinfacht werden, da beispielsweise weniger Bauteile oder sogar nur ein Bauteil, beispielsweise in einem Schmiermittelreservoir oder einem Schmiersystem, angeordnet werden können. Das Gehäuse kann beispielsweise als nicht drehendes Bauteil ausgebildet sein. Mit anderen Worten ausgedrückt, dreht sich das Gehäuse nicht mit, wenn sich der Schmiermittelfilter dreht bzw. ist nicht drehend gelagert. Dadurch kann beispielsweise ein Energieverbrauch der Schmiermittelfiltereinheit und eine unnötige Verwirbelung des Schmiermittels reduziert werden. Alternativ kann das Gehäuse zumindest teilweise den Innenraum des Schmiermittelfilters bzw. den zylinderförmigen Abschnitt des Schmiermittelfilters ausbilden. In diesem Fall könnte das Gehäuse drehbar gelagert bzw. ausgebildet sein, sodass es bei einem Betrieb des Schmiermittelfilters gedreht werden kann. Dadurch könnte ggf. ermöglicht werden, dass ein Schmiermittel, das sich in dem Gehäuse befindet, in Rotation versetzt wird, sodass die Partikel, die sich in dem Schmiermittel befinden nach radial außen beschleunigt werden. Es kann ggf. ein Aufbau der Schmiermittelfiltereinheit vereinfacht werden, da der Schmiermittelfilter dann selbst kein eigenes Bauteil ist, sondern beispielsweise durch das Gehäuse der Schmiermittelfiltereinheit ausgebildet werden kann.

Ausführungsbeispiele betreffen ferner ein Schmiersystem mit wenigstens einem Schmiermittelreservoir und wenigstens einem Anschluss für einen Schmiermittelverbraucher. Das Schmiersystem umfasst ferner einen Schmiermittelfilter nach einem der vorhergehend beschriebenen Ausführungsbeispiele. Dadurch kann ggf. eine effektive Förderung und Filterung des Schmiermittels ermöglicht werden. Ein Schmiermittelreservoir kann beispielsweise ein Behälter, in dem sich das Schmiermittel befindet, sein. Ein Schmiermittelverbraucher kann beispielsweise jedwedes Bauteil, zu dem Schmiermittel gefördert wird, sein.

Bei einigen weiteren Ausführungsbeispielen ist die Schmiermittelfiltereinheit in einem Bodenbereich des Schmiermittelreservoirs angeordnet. So kann beispielsweise das Schmiermittelreservoir selbst und damit auch das Schmiersystem sehr kompakt gebaut werden. Dies kann ggf. möglich sein, weil die Schmiermittelfiltereinheit nicht in einem Abstand zu einem Bodenbereich des Schmiermittelreservoirs angeordnet werden muss, in dem sich normalerweise ein sogenannter Ölsumpf befindet, beispielsweise eine Ansammlung oder Häufung von Partikeln und/oder Schmutz. Ein Ansaugen des Ölsumpfs in dem Schmiermittelreservoir bzw. von Verunreinigungen mit dem Schmiermittelfilter würde ggf. keine Beeinträchtigung darstellen bzw. für diese relativ unproblematisch sein. Durch den Schmiermittelfilter kann das Schmiermittel vor dem Eintreten in die Schmiermittelpumpe gereinigt werden. Auch ein hohes Aufkommen oder Vorhandensein von Partikeln kann beispielsweise nicht zu einer Reduzierung des Durchsatzes des Schmiermittelfilters führen, da die Partikel radial nach außen beschleunigt werden und beispielsweise keine Poren oder Öffnungen wie bei Sieben oder porösen Filtern zusetzen oder verstopfen können.

Weitere vorteilhafte Ausgestaltungen werden nachfolgenden anhand von in den Zeichnungen dargestellten Ausführungsbeispielen, auf welche Ausführungsbeispiele jedoch nicht beschränkt sind, näher beschrieben.

So zeigen die Figuren schematisch die nachfolgenden Ansichten.
- Fig. 1: zeigt eine schematische Querschnittsdarstellung einer Schnittansicht einer Schmiermittelfiltereinheit gemäß einem Ausführungsbeispiel;
- Fig. 2: zeigt eine schematische Aufsichtsdarstellung einer Innenansicht einer Zahnradpumpe gemäß dem Ausführungsbeispiel der Fig. 1;
- Fig. 3: zeigt eine schematische Darstellung eines Schmiersystems gemäß einem Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen und Alternativen, die im Bereich der durch die Ansprüche gekennzeichneten Erfindung liegen, abdecken sollen. Gleiche Bezugszeichen bezeichnen in der gesamten Figurenbeschreibung gleiche oder ähnliche Elemente.

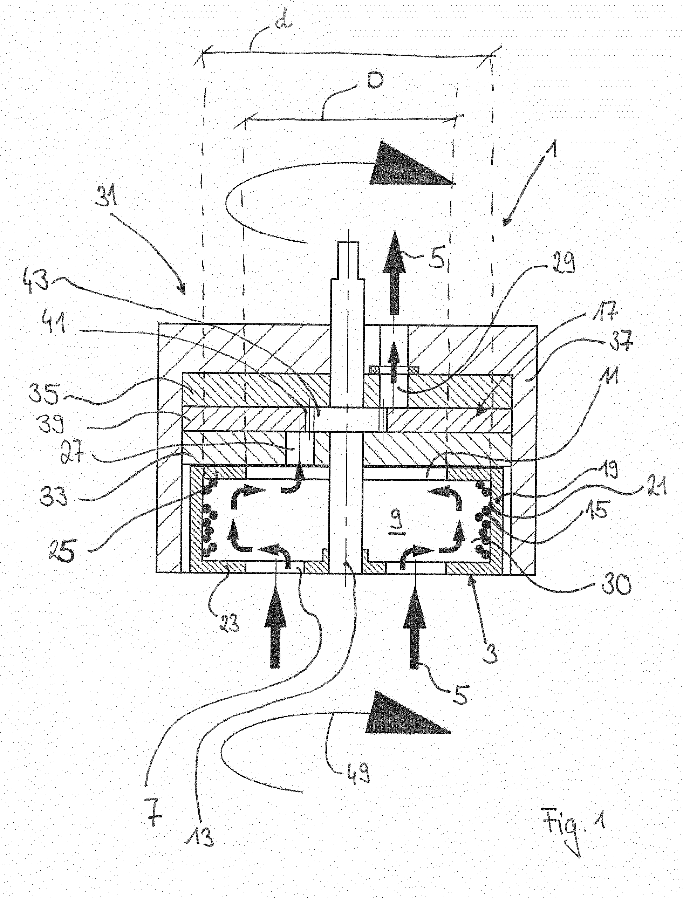

Fig. 1 zeigt eine schematische Querschnittsdarstellung einer Schnittansicht einer Schmiermittelfiltereinheit gemäß einem Ausführungsbeispiel.

Wie in Fig. 1 dargestellt, umfasst eine Schmiermittelfiltereinheit 1 einen Schmiermittelfilter 3 zum Filtern eines Schmiermittels (angedeutet durch Pfeile 5). Der Schmiermittelfilter 3 umfasst wenigstens eine Eingangsöffnung 7. Die Eingangsöffnung 7 ist ausgebildet, um das Schmiermittel in einen Innenraum 9 des Schmiermittelfilters 3 eintreten zu lassen. Ferner umfasst der Schmiermittelfilter 3 wenigstens eine Ausgangsöffnung 11. Die Ausgangsöffnung 11 ist ausgebildet, um das Schmiermittel wieder aus dem Innenraum 9 des Schmiermittelfilters 3 austreten zu lassen. Ferner ist der Schmiermittelfilter 3 ausgebildet, um um eine Achse 13 gedreht zu werden, sodass Partikel 15, die sich in dem Schmiermittel befinden, nach radial außen beschleunigt werden.

Bei Fig. 1 umfasst die Schmiermittelfiltereinheit 1 eine Schmiermittelpumpe 17. Bei dem hier gezeigten Ausführungsbeispiel ist die Schmiermittelpumpe 17 eine Zahnradpumpe, wie aus der Darstellung eines Pumpenkörpers mit einer Zahnradpumpe und dem Schmiermittelfilter, der als Zentrifugalfilter ausgebildet ist, in Fig. 1 erkennbar ist.

Bei dem vorliegenden Ausführungsbeispiel umfasst der Schmiermittelfilter 3 eine im Wesentlichen zylindrisch ausgebildete Seitenwand 19, die den Innenraum 9 in die radiale Richtung begrenzt. Eine Innenfläche 21 der Seitenwand 19 weist eine im Wesentlichen glatte Struktur auf. Bei anderen nicht dargestellten Ausführungsbeispielen, kann die Innenwand eine Struktur aufweisen. Beispielsweise kann sich eine solche Struktur zur Aufnahme oder zum Festhalten der Partikel eignen. Die Eingangsöffnung 7 ist in einer Grundplatte 23 des Schmiermittelfilters 3 angeordnet bzw. eingebracht. Die Eingangsöffnung 7 ist bei dem vorliegenden Ausführungsbeispiel ringförmig ausgebildet. Die Eingangsöffnung 7 ist im Wesentlichen konzentrisch zu der Achse 13 und/oder der Seitenwand 19 angeordnet.

Der Innenraum 9 ist bis auf die Achse 13, welche als Antriebswelle wirkt, vollständig frei von Umlenkelementen. In dem Innenraum 9 des Schmiermittelfilters 3 befinden sich keine weiteren Elemente wie Rührer, Prallplatten, Leitelemente, Siebe, Schleuder- und/oder Filtertrommeln. Die Filterwirkung wird ausschließlich durch das Drehen des Schmiermittelfilters bewirkt. Dadurch kann ein Aufbau des Schmiermittefilters 3 bei machen Ausführungsbeispielen vereinfacht sein. Unter Umständen kann eine Teileanzahl und/oder eine Masse, die montiert und in einem Betrieb auch bewegt werden muss, reduziert sein. Der Schmiermittelfilter 3 oder genauer gesagt, dessen Innenraum 9 ist ausgebildet, sodass das Schmiermittel den Schmiermittelfilter 3 parallel zu der Drehachse 13 oder in einem Bereich, der sich von der Eingangsöffnung aus jeweils um bis zu 45°der Achse 13 abgewandte Seite erstreckt, durchströmen kann. Das Schmiermittel passiert, nachdem es durch die Eingangsöffnung 7 in den Innenraum 9 eingetreten ist ausschließlich den Innenraum 9 bevor es aus der Ausgangsöffnung 11 in die Schmiermittelpumpe eintritt und wird nicht in andere Kammern umgeleitet. Bei einigen weiteren, nicht dargestellten Ausführungsbeispielen können auch Rühr- oder Filterhilfsmittel vorgesehen sein.

Die Grundplatte 23 weist im Wesentlichen eine Scheibenform bzw. die Form einer Kreisscheibe auf. Bei dem vorliegenden Ausführungsbeispiel ist der Schmiermittelfilter 3 über die Grundplatte 23 mit der Achse 13, welche auch als Antriebswelle bezeichnet werden kann, verbunden. Dadurch wird der Schmiermittelfilter 3, wenn die Achse 13 gedreht wird, ebenfalls um die Achse 13 gedreht.

Die Ausgangsöffnung 11 ist in eine der Grundplatte 23 im Wesentlichen gegenüberliegend angeordnete Deckplatte 25 eingebracht. Die Ausgangsöffnung 11 weist im Wesentlichen die Form einer Kreisscheibe auf. Die Achse 13 ragt durch die Ausgangsöffnung 11 hindurch. Die Ausgangsöffnung 11 ist im Wesentlichen konzentrisch zu der Drehachse 13 und/oder zu der Seitenwand 19 angeordnet. Die Ausgangsöffnung 11 weist einen Durchmesser D auf. Der Durchmesser D ist kleiner als ein Durchmesser d des Innenraums 9 des Schmiermittelfilters 3. Mit anderen Worten ausgedrückt, weist die Ausgangsöffnung 11 einen kleineren Durchmesser auf bzw. ist in einem kleineren Durchmesserbereich angeordnet als ein Bereich in dem sich die Partikel 15, wenn sich der Schmiermittelfilter 3 dreht, sammeln. So kann ggf. verhindert werden, dass die Partikel 15, wenn sich der Schmiermittelfilter 3 dreht, durch die Ausgangsöffnung 11 austreten. Bei weiteren nicht dargestellten Ausführungsbeispielen, kann die Ausgangsöffnung ringförmig ausgebildet sein bzw. die Achse über die Deckplatte 25 mit dem Schmiermittelfilter verbunden sein. Es kann beispielsweise ermöglicht werden, dass die Drehbewegung an zwei oder ggf. einer Mehrzahl von Punkten auf den Filter übertragen werden kann.

Die Schmiermittelpumpe 17 weist eine Ansaugöffnung 27 auf einer Ansaugseite der Schmiermittelpumpe 17 auf. Ferner weist die Schmiermittelpumpe 17 auf einer Druckseite 31 der Schmiermittelpumpe 17 einen Schmiermittelauslass 29 auf. Die Schmiermittelpumpe 17 fördert das Schmiermittel von der Ansaugöffnung 27 zu dem Schmiermittelauslass 29 auf die Druckseite 31 der Schmiermittelpumpe 17.

Die Ausgangsöffnung 11 des Schmiermittelfilters 3 ist mit der Ansaugöffnung 27 der Schmiermittelpumpe 17 gekoppelt. Das Schmiermittel das den Innenraum 9 des Schmierfilters 3 durch die Ausgangsöffnung 11 des Schmiermittelfilters verlässt, tritt durch die Ansaugöffnung 27 in die Schmiermittelpumpe 17 ein. Dadurch kann ggf. ermöglicht werden, dass das Schmiermittel gefiltert und oder gereinigt wird, bevor es in die Schmiermittelpumpe gelangt. Mit anderen Worten ausgedrückt, können die Partikel 15 bzw. Verunreinigungen davon abgehalten werden, in die Schmiermittelpumpe 17 einzutreten.

Die Schmiermittelpumpe 17 umfasst eine Ansaugplatte 33, in die die Ansaugöffnung 27 eingebracht ist. Der Schmiermittelauslass 29 ist in eine Auslassplatte 35 eingebracht, die im Wesentlichen parallel zu der Ansaugplatte 33 angeordnet ist. Die Auslassplatte 35 und die Ansaugplatte 33 sind im Wesentlichen vertikal zu einer Förderrichtung des Schmiermittels und/oder der Achse 13 angeordnet. Die Ansaugplatte 33 und die Auslassplatte 35 sind mit einem Gehäuse 37 verbunden. Wenn die Achse 13 gedreht wird, drehen sich die Auslassplatte 35 und die Ansaugplatte 33 nicht mit. Das Gehäuse 37 schließt in Richtung der Drehachse 13 bündig mit einer Unterkante, die der Schmiermittelpumpe 17 abgewandt ist, ab. Bei einigen weiteren, nicht dargestellten Ausführungsbeispielen kann das Gehäuse auch eine geringere Ausdehnung in die axiale Richtung aufweisen, und beispielswiese nur abschnittweise oder gar nicht mit dem Schmiermittelfilter überlappen. Optional kann das Gehäuse auch in axialer Richtung eine größere Ausdehnung als der Schmiermittelfilter aufweisen und in axialer Richtung über die Kante des Schmiermittelfilters, die der Schmiermittelpumpe abgewandt ist, hinausragen.

Zwischen der Ansaugplatte 33 und der Auslassplatte 35 ist eine Förderplatte 39 angeordnet. Die Förderplatte 39 ist im Wesentlichen parallel zu der Ansaugplatte 33 bzw. der Auslassplatte 35 ausgerichtet. Die Förderplatte 39 ist ebenfalls fest mit dem Gehäuse 37 verbunden. Die Förderplatte 39, die Ansaugplatte 33 und die Auslassplatte 35 weisen jeweils im Wesentlichen die Form einer Kreisscheibe auf. In alternativen, nicht dargestellten Ausführungsbeispielen können die Scheiben jedwede andere Form, beispielsweise Vieleck, Viereck, Dreieck, Rechteck, Quadrat, Oval, etc. aufweisen.

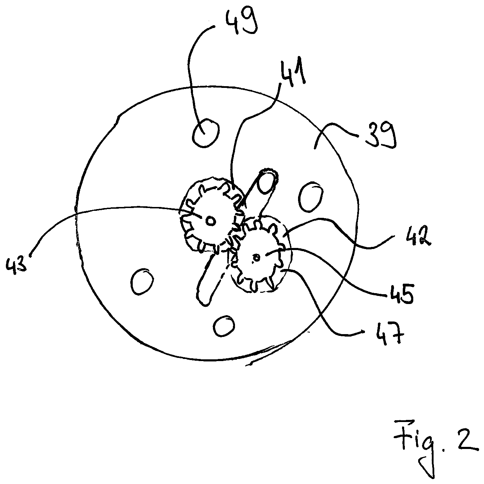

Fig. 2 zeigt eine schematische Aufsichtsdarstellung einer Innenansicht einer Zahnradpumpe gemäß dem Ausführungsbeispiel der Fig. 1.

Die Förderplatte 39 weist eine im Wesentlichen kreisscheibenförmige Ausnehmung 41 wie auch in Fig. 2 erkennbar, auf. Die kreisscheibenförmige Ausnehmung 41 ist im Wesentlichen zentrisch zu der Förderplatte 39 angeordnet. Ferner umfasst die Förderplatte 39, wie in Fig. 2 dargestellt, einen weiteren kreisscheibenförmigen Ausschnitt 42, der exzentrisch in der Förderplatte 39 und damit auch exzentrisch zu einer Drehbewegung des Schmiermittelfilters 3 und der Achse 13 angeordnet ist. In die kreisscheibenförmige Ausnehmung 41 ist ein Zahnrad 43 eingesetzt. Das Zahnrad 43 ist mit der Achse 13 verbunden, sodass es bei einer Drehbewegung der Achse 13 ebenfalls angetrieben und gedreht wird. Das Zahnrad 43 greift in ein exzentrisch gelagertes Zahnrad 45 ein, das in dem exzentrischen Ausschnitt 42 der Förderplatte 39 aufgenommen ist. Wie in Fig. 2 dargestellt, weist die Förderplatte 39 eine Mehrzahl von Bohrungen 49 auf. Diese können beispielsweise zur Verbindung mit der Ansaugplatte 33 und der Auslassplatte 35 dienen.

Wenn die Schmiermittelfiltereinheit 1 bzw. die Schmiermittelpumpe 17 bzw. der Schmiermittelfilter 3 in Betrieb gesetzt werden soll, wird dazu die Achse 13, welche auch als Antriebswelle bezeichnet werden kann über einen nicht dargestellten Antrieb, wie mit dem Pfeil 49 angedeutet, in Rotation versetzt bzw. gedreht. Dadurch kann sowohl der Schmiermittelfilter 3 der mit der Achse 13 verbunden ist wie auch das Zahnrad 43 gedreht werden. Das Schmiermittel wird in Pfeilrichtung 5 durch die Eingangsöffnung 7 des Schmiermittelfilters 3 angesaugt bzw. gefördert und in dem Innenraum 9 in Rotation versetzt. Ferner tritt das Schmiermittel über die Ausgangsöffnung 11 des Schmiermittelfilters 3 aus dem Innenraum 9 aus. Über die Ansaugöffnung 27 der Schmiermittelpumpe 17 und durch einen nicht dargestellten Förderraum zwischen dem Zahnrad 43 und dem Zahnrad 45 kann das Schmiermittel zu dem Schmiermittelauslass 29 gefördert werden. In dem Innenraum 9 kann sich eine Zentrifugalkraft aufbauen, die auf das Schmiermittel und die Partikel 15 wirkt. Dadurch können die Partikel 15 nach radial außen, also in Richtung der Seitenwand 19 bzw. im Wesentlichen senkrecht weg von der Drehachse bzw. Achse 13, beschleunigt werden. Eine Bewegung der Partikel 15 wird an der Innenfläche 21 der Seitenwand 19 gestoppt. Dadurch, dass die Ausgangsöffnung 11 in einem radial innen liegenden Bereich angeordnet ist, von dem sich die Partikel 15, bei einer Drehung des Schmiermittelfilters 3 wegbewegen, kann ggf. verhindert bzw. reduziert werden, dass die Partikel aus der Ausgangsöffnung 11 mit dem Schmiermittel austreten. Die Partikel 15 können beispielsweise von dem Schmiermittel getrennt werden. Mit anderen Worten ausgedrückt, wirkt der Schmiermittelfilter 3 wie eine Zentrifuge. Die Partikel 15 werden in einem im Wesentlichen C-förmig ausgebildeten Speicherraum 30 für Schmutz, gesammelt. Der C-förmige Abschnitt wird zwischen der sich in axiale Richtung erstreckende ringförmige Seitenwand 19, die den Schmiermittelfilter 3 in radialer Richtung begrenzt, und der scheibenförmigen Deckplatte 25, die den Schmierfilter zur Schmiermittelpumpe 17 hin begrenzt, ausgebildet. Die Grundplatte 23 bildet einen weiteren, ggf. nicht zwingend notwendigen, Teil des C-förmigen Abschnitts.

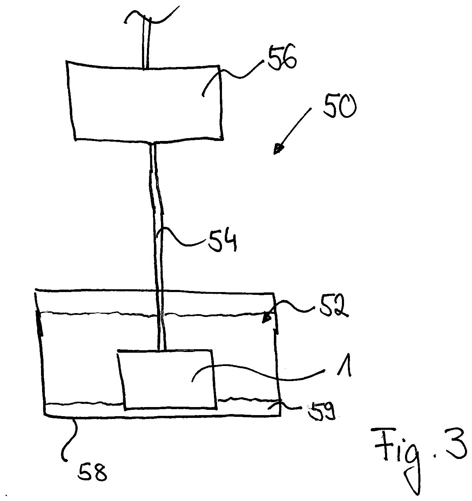

Fig. 3 zeigt eine schematische Darstellung eines Schmiersystems gemäß einem Ausführungsbeispiel.

Wie in Fig. 3 gezeigt, kann die Schmiermittelfiltereinheit 1 in einem Schmiersystem 50 eingesetzt werden. Das Schmiersystem 50 umfasst wenigstens ein Schmiermittelreservoir 52. Das Schmiermittelreservoir 52 ist ausgebildet zur Aufnahme bzw. zum Bereithalten des Schmiermittels bzw. Schmiermediums. Das Schmiersystem 50 weist einen Anschluss 54 für einen Schmiermittelverbraucher 56 auf. Die Schmiermittelfiltereinheit 1 kann nahe einem Boden 58 des Schmiermittelreservoirs 52 angeordnet werden. Auch wenn sich nahe des Bodens 58 ein sogenannter Ölsumpf 59 bildet, in dem sich vermehrt Partikel, Schmutz oder dergleichen befinden, kann dies ggf. nicht zu einer Verminderung der Pumpleistung oder der Filterleistung führen. Die mit angesaugten Partikel 15 können ggf. von dem Schmiermittelfilter 3 davon abgehalten werden, in die Schmiermittelpumpe 17 einzutreten.

Mit anderen Worten ausgedrückt, kann die Schmiermittelfiltereinheit 1 beispielsweise in allen Schmiersystemen eingesetzt werden bzw. zur Filterung oder Reinigung dienen, bei denen für die Funktion/Arbeitsweise, beispielsweise von Zentralschmieranlagen mit Zumessventilen (z.B. Vorschmier-Nachschmierverteilern) ein Druckaufbau und/oder Druckabbau (Druckentlastung) in der Anlage benötigt wird. Damit können durch den als Zentrifuge ausgebildeten Schmiermittelfilter 3 beispielsweise die Nachteile konventioneller Sieboder Filterlösungen reduziert werden. Ferner kann mit dem Zentrifugalfilter für Schmiermedien in Pumpen für Zentralschmieranlagen das Herausfiltern von kleineren Schmutzpartikeln aus dem Schmiermedium (Öl, Fließfett) ggf. ohne Auswirkung auf den Volumenstrom der Pumpe (in Abhängigkeit eines Füllgrads des Schmiermittelfilter) sowie ohne negative Einflüsse auf das Schmiermedium selber, ermöglicht werden.

Der Schmiermittelfilter 3 kann in weiteren, nicht dargestellten Ausführungsbeispielen einen eigenen Antrieb aufweisen oder wie bei dem Ausführungsbeispiel direkt über die Pumpenwelle bzw. Achse 13 angetrieben werden. In weiteren, nicht dargestellten Ausführungsbeispielen kann der Schmiermittelfilter 3 eine Übersetzung und damit andere Drehzahl als die Pumpe 17 aufweisen. Dazu kann ggf. ein Getriebe zwischen Schmiermittelfilter 3 und der Antriebswelle bzw. Achse 13 eingebracht bzw. angeordnet sein.

Ferner kann ggf. aufgrund der guten Wirksamkeit des Schmiermittelfilters 3 die Effizienz der Behälterausnutzung, also des Schmiermittelreservoirs 52, verbessert werden. Ein Bereich oder Abstand für den sogenannten "Ölsumpf" muss nicht vorgehalten werden. Konstruktiv kann die beispielsweise bedeuten, dass die Schmiermittelpumpe 17 sehr dicht von dem Boden des Behälters, bzw. Behälterboden ansaugen kann. Dies kann ggf. zu einem sehr kompakten Aggregat (Schmiermittelfilter) und/oder Schmiermittelreservoirs 52 beispielsweise mit einem höheren Behälternutzvolumen führen.

Die in der vorstehenden Beschreibung, den nachfolgenden Ansprüchen und den beigefügten Figuren offenbarten Ausführungsbeispiele und deren Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 1: Schmiermittelfiltereinheit
- 3: Schmiermittelfilter
- 5: Pfeil
- 7: Eingangsöffnung
- 9: Innenraum
- 11: Ausgangsöffnung
- 13: Achse
- 15: Partikel
- 17: Schmiermittelpumpe
- 19: Seitenwand
- 21: Innenfläche
- 23: Grundplatte
- 25: Deckplatte
- 27: Ausgangsöffnung
- 29: Schmiermittelauslass
- 30: Speicherraum für Schmutz
- 31: Druckseite
- 33: Ansaugplatte
- 35: Auslassplatte
- 37: Gehäuse
- 39: Förderplatte
- 41: Ausschnitt
- 42: Ausschnitt
- 43: Zahnrad
- 45: Zahnrad
- 49: Bohrung
- 50: Schmiersystem
- 52: Schmiermittelreservoir
- 54: Anschluss
- 56: Schmiermittelverbraucher
- 58: Boden
- 58: Ölsumpf
- D: Durchmesser
- D: Durchmesser

## Patentansprüche

1. Schmiermittelfiltereinheit (1) mit einem Schmiermittelfilter (3) zum Filtern eines Schmiermittels mit folgenden Merkmalen:
wenigstens einer Eingangsöffnung (7), die ausgebildet ist, um das Schmiermittel in einen Innenraum (9) des Schmiermittelfilters (3) eintreten zu lassen und
wenigstens einer Ausgangsöffnung (11), die ausgebildet ist, um das Schmiermittel wieder aus dem Innenraum (9) des Schmiermittelfilters (3) austreten zu lassen,
wobei der Schmiermittelfilter (3) ausgebildet ist, um um eine Achse (13) gedreht zu werden, sodass Partikel (15), die sich in dem Schmiermittel befinden, nach radial außen beschleunigt werden,
mit einer Schmiermittelpumpe (17), die ausgebildet ist, das Schmiermittel aus einem Schmiermittelreservoir (52) über wenigstens eine Ansaugöffnung (27) der Schmiermittelpumpe (17) zu einer Druckseite (31) der Schmiermittelpumpe (17) zu fördern, wobei die wenigstens eine Ausgangsöffnung (11) des Schmiermittelfilters (3) mit der wenigstens einen Ansaugöffnung (27) der Schmiermittelpumpe (17) gekoppelt ist,
wobei der Schmiermittelfilter (3) und die Schmiermittelpumpe (17) in einem Gehäuse (37) angeordnet sind;
wobei das Gehäuse (37) in Richtung der Drehachse (13) bündig mit einer Unterkante des Schmiermittelfilters, die der Schmiermittelpumpe (17) abgewandt ist, abschließt; und
wobei die Eingangsöffnung (7) in einer Grundplatte (23) des Schmiermittelfilters (3) angeordnet bzw. eingebracht und ring-förmig ausgebildet ist.

2. Schmiermittelfiltereinheit, nach Anspruch 1, wobei die wenigstens eine Ausgangsöffnung (11) in einem radial innen liegenden Bereich angeordnet ist.

3. Schmiermittelfiltereinheit nach einem der vorhergehenden Ansprüche, wobei der Schmiermittelfilter (3) ausgebildet ist, sodass sich die Partikel (15)in einem radial außen liegenden Bereich des Innenraums (9) des Schmiermittelfilters (1) sammeln.

4. Schmiermittelfiltereinheit nach einem der vorhergehenden Ansprüche, wobei der Schmiermittelfilter (3) zumindest einen zylinderförmigen Abschnitt aufweist, der bezüglich einer Symmetrieachse des Schmiermittelfilters im Wesentlichen einen Winkel zwischen 0° bis 40° aufweist.

5. Schmiermittelfiltereinheit nach einem der vorhergehenden Ansprüche, wobei der Schmiermittelfilter (3) eine im Wesentlichen glatte Innenfläche aufweist.

6. Schmiermittelfiltereinheit nach Anspruch 5, wobei die Schmiermittelpumpe (17) eine drehende Antriebswelle (13) aufweist, die ausgebildet ist, um den Schmiermittelfilter (3) zu drehen.

7. Schmiermittelfiltereinheit nach Anspruch 6, wobei der Schmiermittelfilter (3) über ein Getriebe mit der Antriebswelle (13) verbunden ist.

8. Schmiersystem mit wenigstens einem Schmiermittelreservoir (52), wenigstens einem Anschluss (54) für einen Schmiermittelverbraucher (56) und wenigstens einer Schmiermittelfiltereinheit (1) nach einem der vorhergehenden Ansprüche.

9. Schmiersystem nach Anspruch 8, wobei die Schmiermittelfiltereinheit (1) in einem Bodenbereich (58) des Schmiermittelreservoirs (52) angeordnet ist.

## Claims

1. Lubricant filter unit (1) having a lubricant filter (3) for filtering a lubricant, having the following features:
at least one entry opening (7) which is configured to allow the lubricant to enter an interior space (9) of the lubricant filter (3); and
at least one exit opening (11) which is configured to allow the lubricant to exit the interior space (9) of the lubricant filter (3) again;
wherein the lubricant filter (3) is configured to be rotated about an axis (13) such that particles (15) that are located in the lubricant are accelerated radially outwards;
having a lubricant pump (17) which is configured to convey the lubricant from a lubricant reservoir (52) by way of at least one induction opening (27) of the lubricant pump (17) to a pressure side (31) of the lubricant pump (17), wherein the at least one exit opening (11) of the lubricant filter (3) is coupled to the at least one induction opening (27) of the lubricant pump (17);
wherein the lubricant filter (3) and the lubricant pump (17) are disposed in a housing (37);
wherein the housing (37) in the direction of the rotation axis (13) terminates so as to be flush with a lower edge of the lubricant filter that faces away from the lubricant pump (17); and
wherein the entry opening (7) is disposed or incorporated in a base plate (23) of the lubricant filter (3) and is configured to be annular.

2. Lubricant filter unit according to Claim 1, wherein the at least one exit opening (11) is disposed in a radially inward region.

3. Lubricant filter unit according to one of the preceding claims, wherein the lubricant filter (3) is configured such that the particles (15) accumulate in a radially outward region of the interior space (9) of the lubricant filter (1).

4. Lubricant filter unit according to one of the preceding claims, wherein the lubricant filter (3) has at least one cylindrical portion which in terms of a symmetry axis of the lubricant filter substantially has an angle between 0° and 40°.

5. Lubricant filter unit according to one of the preceding claims, wherein the lubricant filter (3) has a substantially smooth internal face.

6. Lubricant filter unit according to Claim 5, wherein the lubricant pump (17) has a rotating drive shaft (13) which is configured to rotate the lubricant filter (3).

7. Lubricant filter unit according to Claim 6, wherein the lubricant filter (3) is connected to the drive shaft (13) by way of a gearbox.

8. Lubricant system having at least one lubricant reservoir (52), at least one connector (54) for a lubricant consumer (56), and at least one lubricant filter unit (1) according to one of the preceding claims.

9. Lubricant system according to Claim 8, wherein the lubricant filter unit (1) is disposed in a bottom region (58) of the lubricant reservoir (52).

## Revendications

1. Unité de filtre à lubrifiant (1) avec un filtre à lubrifiant (3) pour filtrer un lubrifiant, avec les caractéristiques suivantes :
au moins une ouverture d'entrée (7) qui est conçue pour laisser entrer le lubrifiant dans un espace intérieur (9) du filtre à lubrifiant (3) et
au moins une ouverture de sortie (11) qui est conçue pour laisser sortir le lubrifiant de l'espace intérieur (9) du filtre à lubrifiant (3),
le filtre à lubrifiant (3) étant conçu pour être mis en rotation autour d'un axe (13), de sorte que des particules (15) présentes dans le lubrifiant sont accélérées radialement vers l'extérieur,
avec une pompe à lubrifiant (17) qui est conçue pour transporter le lubrifiant depuis un réservoir de lubrifiant (52) vers un côté de refoulement (31) de la pompe à lubrifiant (17) via au moins une ouverture d'aspiration (27) de la pompe à lubrifiant (17), l'au moins une ouverture de sortie (11) du filtre à lubrifiant (3) étant raccordée à l'au moins une ouverture d'aspiration (27) de la pompe à lubrifiant (17),
le filtre à lubrifiant (3) et la pompe à lubrifiant (17) étant agencés dans un boîtier (37) ;
le boîtier (37) se terminant, dans la direction de l'axe de rotation (13), en affleurement d'un bord inférieur du filtre à lubrifiant, qui est opposé à la pompe à lubrifiant (17) ; et
l'ouverture d'entrée (7) étant agencée ou insérée dans une plaque de base (23) du filtre à lubrifiant (3) et étant réalisée en forme d'anneau.

2. Unité de filtre à lubrifiant selon la revendication 1, dans laquelle l'au moins une ouverture de sortie (11) est agencée dans une zone située radialement à l'intérieur.

3. Unité de filtre à lubrifiant selon l'une des revendications précédentes, dans laquelle le filtre à lubrifiant (3) est conçu de telle sorte que les particules (15) s'accumulent dans une zone radialement extérieure de l'espace intérieur (9) du filtre à lubrifiant (1).

4. Unité de filtre à lubrifiant selon l'une quelconque des revendications précédentes, dans laquelle le filtre à lubrifiant (3) présente au moins une partie cylindrique formant un angle sensiblement compris entre 0° et 40° par rapport à un axe de symétrie du filtre à lubrifiant.

5. Unité de filtre à lubrifiant selon l'une quelconque des revendications précédentes, dans laquelle le filtre à lubrifiant (3) présente une surface intérieure sensiblement lisse.

6. Unité de filtre à lubrifiant selon la revendication 5, dans laquelle la pompe à lubrifiant (17) comprend un arbre d'entraînement rotatif (13) configuré pour faire tourner le filtre à lubrifiant (3).

7. Unité de filtre à lubrifiant selon la revendication 6, dans laquelle le filtre à lubrifiant (3) est relié à l'arbre d'entraînement (13) par un engrenage.

8. Système de lubrification comprenant au moins un réservoir de lubrifiant (52), au moins un raccord (54) pour un consommateur de lubrifiant (56) et au moins une unité de filtre à lubrifiant (1) selon l'une des revendications précédentes.

9. Le système de lubrification selon la revendication 8, dans lequel l'unité de filtre à lubrifiant (1) est agencée dans une zone de fond (58) du réservoir de lubrifiant (52).
